Europäisches Patentamt

European Patent Office

Office européen des brevets

(19)

(11) Numéro de publication: **0 001 364**
**A1**

(12) ## DEMANDE DE BREVET EUROPEEN

(21) Numéro de dépôt: 78400097.8

(22) Date de dépôt: 13.09.78

(51) Int. Cl.²: **B 60 P 3/08**

(30) Priorité: 16.09.77 FR 7728555
01.08.78 FR 7823301

(43) Date de publication de la demande:
04.04.79 Bulletin 79/7

(84) Etats contractants désignés:
BE CH DE GB LU NL SE

(71) Demandeur: LOHR S.A.
14, rue du 14 Juillet
F-67 980 Hangenbieten(FR)

(72) Inventeur: Lohr, Robert
Les Coteaux
67980 Hangenbieten(FR)

(74) Mandataire: Poupon, Michel et al,
CABINET ARBOUSSE - BASTIDE LE MICHEL ANGE 20,
rue de Copenhague
F-67 000 Strasbourg(FR)

(54) Dispositif pour abaisser ou relever le plateau supérieur d'un convoi porte-véhicules.

(57) L'invention concerne les convois porte-véhicules. Dispositif pour abaisser ou relever partiellement ou totalement le plateau supérieur d'une remorque portevéhicules du type comportant un plateau inférieur disposé sur un châssis et un plateau supérieur maintenu à distance dudit plateau inférieur par au moins quatre poteaux-supports verticaux (2), caractérisé en ce qu'il comporte au moins un moteur (1) entraînant en rotation au moins deux vis verticales (3) logées chacune dans un des poteaux (2) d'un même couple, vis dont la rotation entraîne le déplacement vertical de moyens solidaires du plateau supérieur.

Application: au chargement et au déchargement du plateau supérieur d'un convoi porte-véhicules.

EP 0 001 364 A1

0001364

La présente invention concerne les véhicules servant au transport de plusieurs voitures automobiles ou véhicules utilitaires, à savoir, plus particulièrement, les convois porte-véhicules.

Ces convois comprennent en règle générale un véhicule porteur et une remorque, comportant chacun deux niveaux constitués par un plateau inférieur et un plateau supérieur. Le plateau inférieur est fixe et est disposé directement sur le châssis de la remorque. Le plateau supérieur est maintenu à distance du plateau inférieur au moyen de poteaux supports, fixes ou au moins partiellement mobiles, et peut s'abaisser sur le plateau inférieur. L'abaissement et le relèvement du plateau supérieur est effectué jusqu'à ce jour sur les convois connus au moyen de vérins qui agissent soit sur des câbles, soit directement sur des poteaux supports articulés, tel que décrit par exemple dans le brevet français N° 2 213 856 au nom de la demanderesse.

Ces dispositifs de manoeuvre du plateau supérieur présentent toutefois un certain nombre d'inconvénients. Tout d'abord, ils nécessitent des poteaux d'épaisseur importante, en particulier dans le cas des poteaux articulés, limitant par là même la largeur utile de la remorque. Dans le cas de l'utilisation de câbles, il faut en outre procéder à leur remplacement périodique systématique pour éviter tout risque de rupture. Enfin, dans tous les cas le chauffeur du convoi est obligé de procéder à la mise en place ou au retrait de broches de sécurité avant toute manoeuvre de chargement ou de déchargement.

La présente invention a pour but de pallier à ces inconvénients en proposant un nouveau dispositif pour le déplacement du plateau supérieur d'une remorque de convoi porte-véhicules, dispositif permettant de s'abstenir de l'utilisation de vérins et de câbles, n'exigeant pas d'intervention manuelle directe du chauffeur autre que l'enclenchement et l'arrêt d'un moteur et offrant toutes les sécurités requises pendant le transport et la manoeuvre.

Selon l'invention, ce résultat est obtenu avec un dispositif pour abaisser ou relever partiellement ou totalement le plateau supérieur d'une remorque porte-véhicules du type comportant un plateau inférieur disposé sur un châssis et un plateau supérieur maintenu à distance dudit plateau inférieur par au moins quatre poteaux verticaux disposés par couples, dispositif caractérisé en ce qu'il comporte au moins un moteur qui entraîne en rotation au moins deux vis verticales logées chacune dans un des poteaux d'un même couple, lesdites vis mettant en prise des moyens supportant le plateau supérieur et solidaires de celui-ci et entraînant en translation verticale le plateau supérieur par l'intermédiaire desdits moyens.

Pour l'application décrite, tout type de moteur pourra être envisagé, mais on utilisera de manière préférentielle un moteur hydraulique. Ce moteur sera bien entendu muni de tous les organes traditionnels et connus en eux-mêmes, à savoir pompe et distributeurs.

De manière préférentielle et usuelle, les remorques porte-véhicules comportent quatre poteaux-supports verticaux disposés par couples. Selon une caractéris-

- 3 -

0001364

tique de l'invention, au moins deux poteaux d'un même couple seront munis d'une vis verticale qui est suspendue à l'intérieur dudit poteau.

La transmission du mouvement du moteur aux vis se fait par l'intermédiaire d'arbres et de renvois d'angles, dont le nombre, le type et la disposition sont en fait fonctions du nombre de moteurs utilisés et de leur position respective sur la remorque.

Comme indiqué plus haut, les poteaux-supports sont préférentiellement au nombre de quatre, et ils sont en outre toujours disposés par couples situés de part et d'autre des plateaux, un couple maintenant la partie avant du plateau supérieur et l'autre couple maintenant la partie arrière. Concernant les moteurs hydrauliques d'entraînement des vis, on peut alors concevoir de n'en utiliser qu'un seul, le système de transmission devant alors être nécessairement plus élaboré car il faut transmettre le mouvement à quatre vis très éloignées les unes des autres.

On peut aussi selon l'invention, associer un moteur hydraulique à chaque couple de poteaux, ce qui leur assure un fonctionnement indépendant par alimentation séparée des moteurs ; l'alimentation simultanée des moteurs du couple avant et du couple arrière provoque la descente, en position horizontale, du plateau supérieur sur le plateau inférieur, ce qui permet aussi le transport de véhicules utilitaires ou de camions.

Toutes les localisations des moteurs sur la remorque, peuvent être envisagées conformément à l'invention, mais certaines positions privilégiées seront préférées.

Ainsi, on peut disposer le moteur correspondant à un coupl de poteaux sur le châssis et entre lesdits poteaux.

Cette disposition, tout en donnant des résultats satisfaisants présente toutefois en pratique

certains inconvénients par rapport à d'autres possibilités. Ainsi cette solution nécessite l'utilisation d'un trop grand nombre de renvois d'angles et entraîne un positionnement des organes de commande éloigné du moteur.

Pour ces raisons, on préfèrera selon l'invention, et bien que toutes les dispositions possibles puissent être théoriquement utilisées, disposer le ou les moteurs dans l'alignement vertical du ou des poteaux correspondants. De préférence, on placera selon l'invention les moteurs hydrauliques à la base des poteaux correspondants, car il y a d'une part risque, en les plaçant en haut des poteaux, de détérioration du fait de l'exposition, et d'autre part limitation de la largeur utile.

Le positionnement des moteurs sous les poteaux selon l'invention, présente toutes les conditions requises de sécurité et de facilité de mise en oeuvre en particulier en ce qui concerne les organes de transmission.

Les vis verticales sont positionnées à l'intérieur des poteaux supports, mais sont de manière préférentielle suspendues de manière à éviter tout phénomène de flambage, qui nécessiterait leur remplacement. La suspension peut être obtenue par tout moyen adéquat, par exemple une butée à billes précontrainte prenant appui sur le sommet du poteau.

Le pas des vis, qui sont toutes identiques, est déterminé le plus faible possible, compatible toutefois avec une manoeuvre relativement rapide, de manière à assurer l'irréversibilité du dispositif quand le plateau supérieur est en charge, et pour éviter toute utilisation de broches pour le blocage en position.

Les moyens mis en prise par les vis verticales sont de préférence des fourches-supports dont la

fonction est double, à savoir d'une part maintenir le
plateau supérieur et d'autre part l'entraîner en translation verticale. La mise en prise des fourches par les
vis peut être directe, c'est-à-dire que les fourches
peuvent être munies d'un filetage axial correspondant.
De manière préférentielle, la mise en prise sera effectuée indirectement par l'intermédiaire d'un écrou entraîneur situé entre les deux branches de la fourche.

Selon ce mode de réalisation, l'écrou
entraînant la fourche n'est sollicité que par des efforts
axiaux, car la conception de ce système évite l'apparition d'un couple parasite, susceptible de créer un
coincement partiel de l'écrou sur la vis, ce qui augmenterait le couple moteur nécessaire au fonctionnement.

Les fourches-supports selon l'invention sont
toutes munies également d'un axe horizontal fixe perpendiculaire à l'axe du véhicule sur lequel vient s'articuler le plateau supérieur par l'intermédiaire d'une
pièce de liaison.

Sur les fourches des poteaux avants, l'articulation se fera de manière à autoriser une simple
rotation du plateau supérieur autour de l'axe horizontal
de la fourche, le plateau étant fixé par tout moyen
traditionnel à la pièce de liaison montée en rotation
autour dudit axe.

Pour les fourches des poteaux-arrières,
l'articulation du plateau supérieur devra permettre non
seulement une rotation de celui-ci autour de l'axe horizontal, mais aussi le coulissement possible du plateau
supérieur dans le cas où la manoeuvre des vis à l'avant
et à l'arrière du plateau n'est pas effectuée simultanément. Ce résultat pourra être obtenu par une pièce de
liaison montée en rotation autour de l'axe horizontal
de la fourche support et munie en outre d'un guide dans
lequel vient coulisser une rainure ménagée sur le plateau supérieur parallèlement à sa plus grande dimension, le coulissement se faisant selon une direction perpendiculaire à l'axe horizontal de la fourche-support.

Selon un autre mode de réalisation conforme à l'invention, les deux poteaux avants ne sont pas munis de vis, mais uniquement d'une articulation pour la rotation du plateau, seuls les poteaux arrières étant munis de vis conformément à l'invention.

On comprendra mieux l'invention à l'aide de la description ci-après d'un mode de réalisation préférentiel et des déssins annexés dans lesquels :

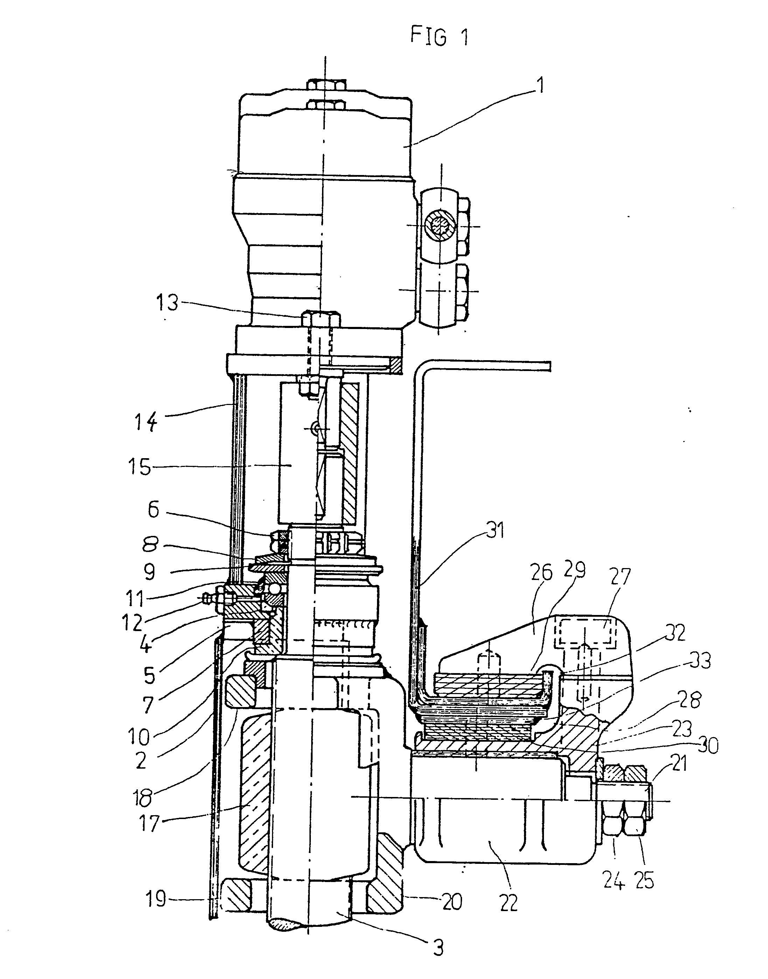

- la figure 1 représente une vue de détail d'une fourche arrière pivotante avec le moteur hydraulique situé en haut de l'un des poteaux d'un couple ;

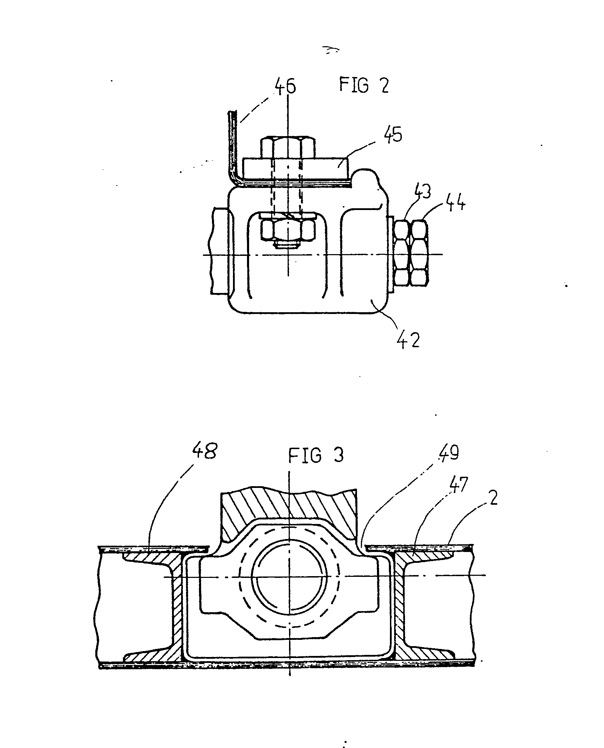

- la figure 2 représente une vue de détail d'une fourche avant pivotante ;

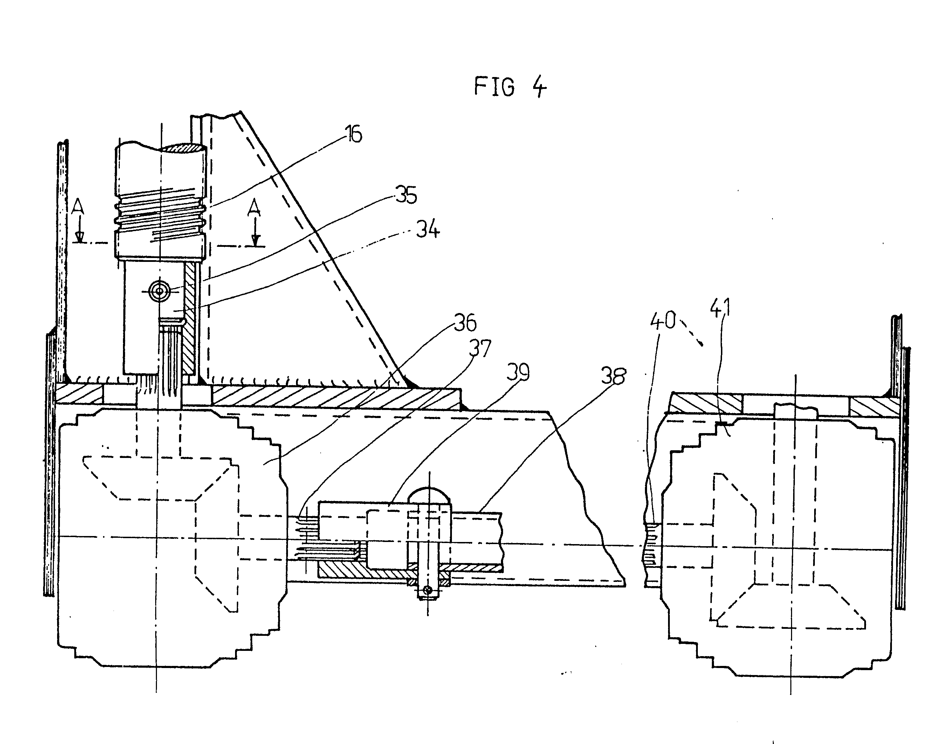

- la figure 3 est une coupe A-A de la figure 4 ;

- la figure 4 schématise la transmission du mouvement du moteur à la vis située dans le poteau ne soutenant pas ledit moteur ;

- les figures 5, 6 et 7 représentent schématiquement le convoi avec le plateau supérieur respectivement en position haute, en position basse et en une position intermédiaire possible ;

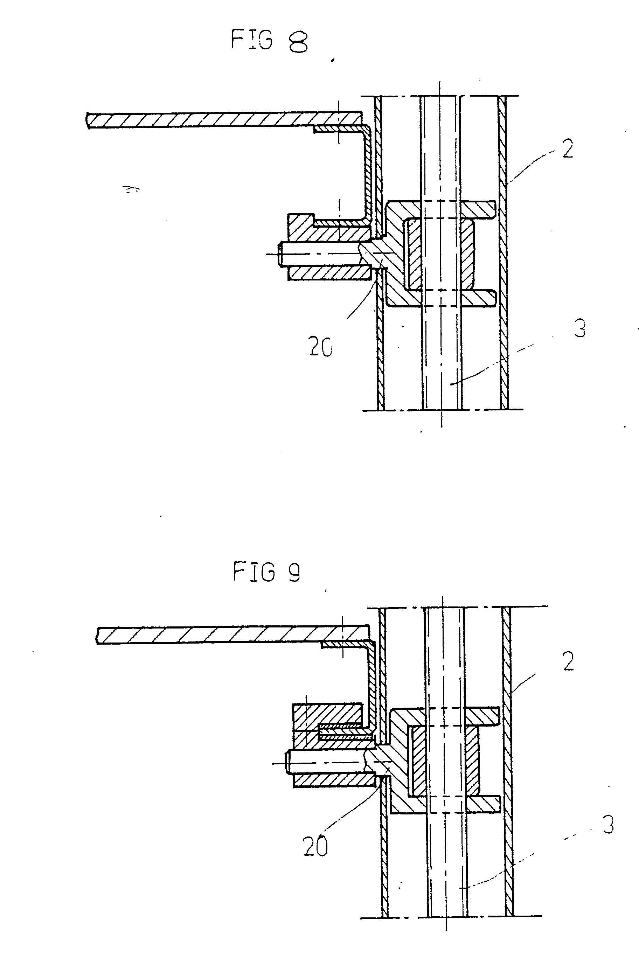

- les figures 8 et 9 sont des représentations schématiques du fonctionnement des fourches-supports avant et arrière ;

- la figure 10 est une représentation schématique du système de transmission dans le cas où le moteur correspondant à un couple de poteaux est situé sur le châssis et entre lesdits poteaux ;

- la figure 11 schématise la fixation et le guidage de la vis dans le poteau-support, dans le cas de la figure 10.

Le dispositif se compose d'un moteur hydraulique 1 situé sur cette représentation en haut d'un poteau 2 et entraîne en rotation une vis 3.

La vis 3 est suspendue par l'intermédiaire d'une butée à billes 4 précontrainte prenant appui sur le sommet 5 du poteau 2, ladite vis étant maintenue en position par un écrou à encoches 6. La précontrainte de la butée à billes 4, qui est disposée sur une plaque porte-butée 7, est assurée par l'insertion d'une rondelle élastique 8 et d'une rondelle simple 9 entre l'écrou et la butée. La précontrainte évite le sautillement de la vis, et donc la détérioration de la butée. Pour assurer une rotation parfaite de la vis, on dispose également une bague de guidage 10, un racleur 11 et un graisseur 12. On peut également prévoir un calage éventuel 9 entre le porte-butée et le sommet 5 du poteau.

Le moteur 1 est fixé par un ensemble vis-écrou 13 sur un support 14 qui vient prendre appui sur la partie supérieure du poteau et est fixé sur celle-ci.

La mise en rotation de la vis par le moteur s'effectue au moyen d'un accouplement 15 connu en lui-même.

La vis est munie sur toute sa largeur d'un filetage à faible pas 16 et entraîne dans sa rotation la translation verticale d'un écrou 17 par exemple en bronze. Cet écrou 17 est disposé entre les deux branches 18, 19 de la fourche-support 20.

La fourche 20 comporte en outre un axe 21 perpendiculaire à la vis 3 et autour duquel est montée en rotation la base 22 d'un guide 23, bloqué par des écrous 24, 25, guide comportant en outre une main de guide 26 fixée sur la base par l'intermédiaire d'un ensemble vis-écrou 27. La main de guide et la base du guide déterminent un volume intérieur 28 sur les faces horizontales duquel sont fixées deux plaques 29, 30 en matière synthétique assurant un bon coulissement d'une rainure 31 du plateau supérieur, rainure munie sur chacune de ses faces de tôles inox 32, 33 assurant également un coulissement régulier.

A sa partie inférieure, la vis 3 est munie d'un manchon cannelé 34 qui est fixé sur celle-ci par des goupilles élastiques 35. Ce manchon cannelé entraîne en rotation un renvoi d'angle 36 en sens normal. La sortie 37 de ce renvoi d'angle est reliée à un arbre 38 par un système identique de manchon cannelé 39. A l'autre extrémité 40 de l'arbre 38 est disposé un renvoi d'angle 41 en sens inversé, qui est relié à l'arbre 38 de la même manière que la sortie du renvoi d'angle 36.

Les fourches 20 du couple de poteaux avant sont munies d'un guide pivotant 42 fixé par des écrous 43,44 sur la fourche correspondante et par un ensemble vis-écrou 45 sur la rainure 46 du plateau supérieur.

Les poteaux 2 sont renforcés intérieurement par des profilés intérieurs 47, 48. Sur la face intérieure des poteaux 2 est ménagé sur toute leur longueur, un jour 49 permettant la translation verticale des fourches support.

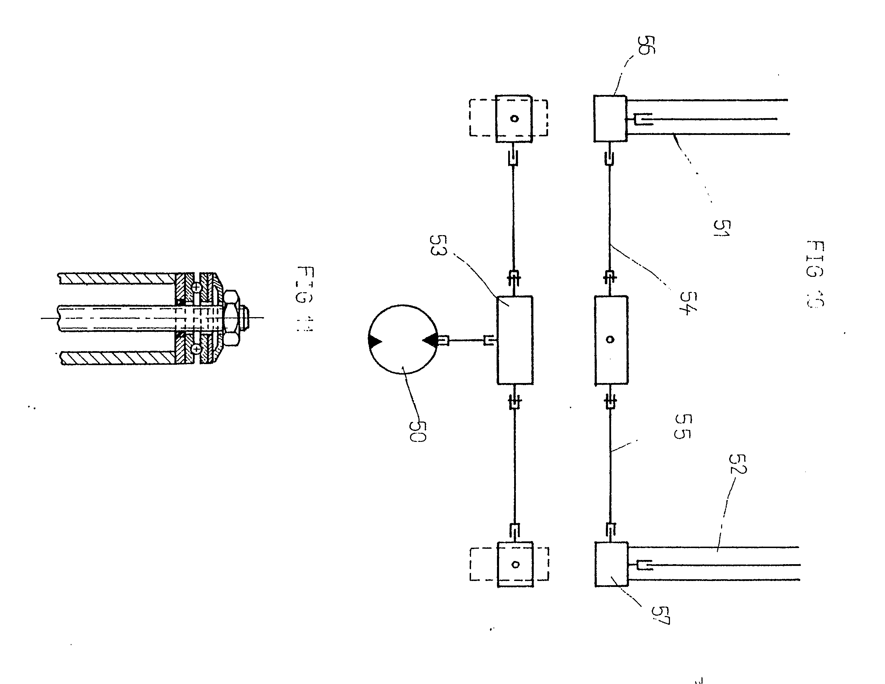

Dans la représentation de la figure 10, le moteur hydraulique 50 disposé sur le châssis entre les deux poteaux 51, 52 d'un même couple entraîne un renvoi d'angle central 53, possédant deux arbres de sorties opposés 54, 55 qui entraînent eux-mêmes deux renvois d'angle latéraux 56, 57 qui entraînent les vis en rotation. Le renvoi d'angle double-sortie doit assurer un sens de rotation inverse des arbres 54 et 55 afin que le sens de rotation des deux vis appartenant à un même couple de poteaux soit le même, permettant ainsi un déplacement simultané.

0001364

Le fonctionnement est le suivant. Lorsque le plateau supérieur est en position haute, l'alimentation du moteur hydraulique du couple de poteaux arrière provoque la descente des fourches-supports arrières et donc l'inclinaison du plateau supérieur avec coulissement de la rainure dans le guide.

Si le couple de poteaux avant est muni d'un moteur hydraulique, on peut alimenter simultanément les deux moteurs, et la descente du plateau supérieur se fera à l'horizontale.

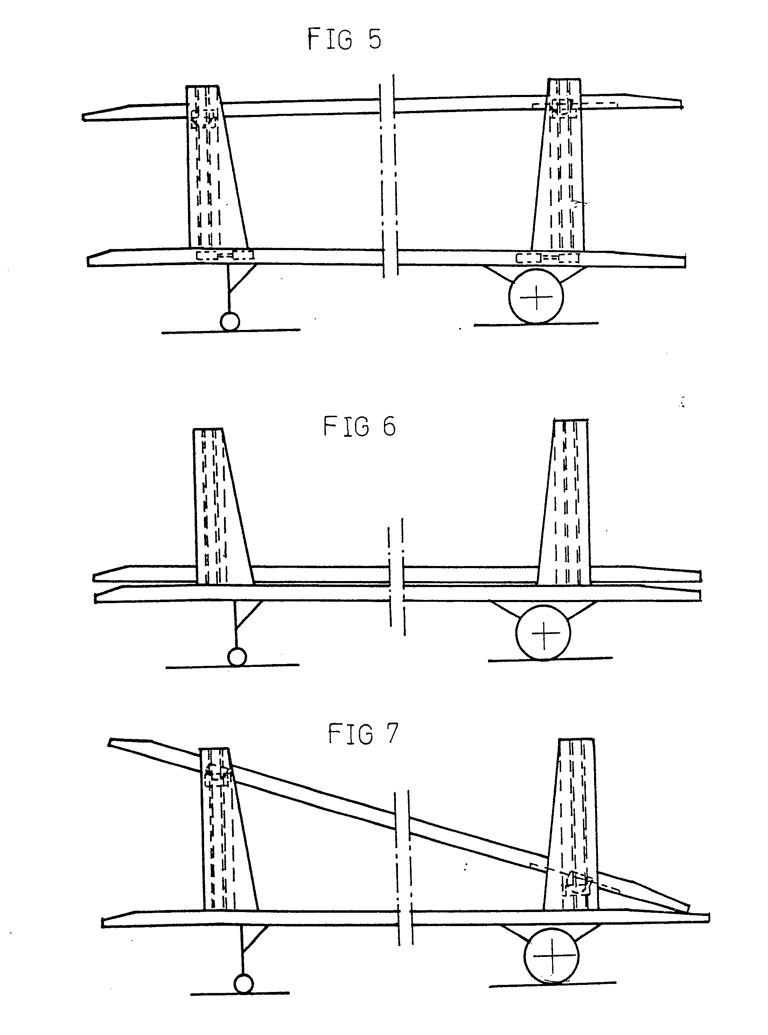

Si le couple de poteaux avant n'est pas équipé de moteur hydraulique ni de vis de translation, le plateau supérieur pivotera autour des supports sur les poteaux avant et s'inclinera, comme représenté sur la figure 7.

La remontée du plateau est effectuée par l'alimentation des moteurs de manière à obtenir une rotation en sens inverse, changeant ainsi le sens de rotation des vis.

1.        Dispositif pour abaisser ou relever partiellement ou totalement le plateau supérieur d'une remorque porte-véhicules du type comportant un plateau inférieur disposé sur un châssis et un plateau supérieur maintenu à distance

dudit plateau inférieur par au moins quatre poteaux supports verticaux disposés par couples de deux poteaux de part et d'autre des plateaux, un couple maintenant l'avant du plateau supérieur, l'autre couple maintenant l'arrière, dispositif caractérisé en ce qu'il comporte au moins un moteur entraînant en rotation, par l'intermédiaire de moyens de transmission, au moins deux vis verticales logées chacune dans un des poteaux d'un même couple, vis dont la rotation entraîne le déplacement vertical de moyens solidaires du plateau supérieur.

2.        Dispositif selon la revendication 1 caractérisé en ce que l'on utilise un moteur hydraulique.

3.        Dispositif selon l'une quelconque des revendications 1 et 2 caractérisé en ce qu'il comporte deux vis verticales disposées chacune dans un des poteaux arrières.

4.        Dispositif selon l'une quelconque des revendications 1 et 2 caractérisé en ce qu'il comporte une vis par poteau-support.

5.        Dispositif selon l'une quelconque des revendications de 1 à 4 caractérisé en ce qu'il comporte un moteur hydraulique par couple de poteaux supports.

6.        Dispositif selon l'une quelconque des revendications de 1 à 5 caractérisé en ce que le moteur correspondant à un couple de poteaux est posé sur le châssis entre les deux poteaux correspondants.

7.          Dispositif selon la revendication 6, caractérisé en ce que les moyens de transmission consistent en un renvoi d'angle central à deux sorties inversées, entraînant simultanément deux renvois d'angles latéraux disposés au pied des vis correspondantes.

8.          Dispositif selon l'une quelconque des revendications de 1 à 5, caractérisé en ce que le moteur correspondant à un couple de poteaux est disposé dans l'axe vertical de l'un des poteaux dudit couple.

9.          Dispositif selon la revendication 8, caractérisé en ce que le moteur est disposé sous l'un des poteaux d'un couple.

10.          Dispositif selon l'une quelconque des revendications 8 et 9, caractérisé en ce que les moyens de transmission consistent en deux renvois d'angle, l'un normal, l'autre inversé, réunis entre eux par un arbre.

11.          Dispositif selon l'une quelconque des revendications de 1 à 10, caractérisé en ce que le mouvement est transmis aux vis verticales par un manchon cannelé reliant les arbres des renvois d'angle aux vis verticales de manière coulissante.

12.          Dispositif selon l'une quelconque des revendications de 1 à 11, caractérisé en ce que la rotation de chaque vis entraîne le déplacement vertical d'une fourche-support le long de ladite vis.

13.          Dispositif selon la revendication 12, caractérisé en ce que la fourche-support est mise en prise par un écrou entraîneur situé entre les deux branches de la fourche.

14.          Dispositif selon l'une quelconque des revendications 12 et 13, caractérisé en ce que le plateau supérieur est articulé autour des fourches-support selon un axe horizontal perpendiculaire à l'axe de la plus

- 12 -

0001364

grande dimension du véhicule.

15.         Dispositif selon la revendication 14, caractérisé en ce que au moins les fourches arrières sont munies d'un guide articulé dans lequel coulisse pendant sa rotation une rainure ménagée sur le plateau supérieur.

16.         Dispositif selon l'une quelconque des revendications de 1 à 15, caractérisé en ce que les vis verticales sont suspendues dans les poteaux-supports par l'intermédiaire de butées à billes précontraintes.

FIG 1

0001364

FIG 2

46

45

43 44

42

FIG 3

48 49 47 2

FIG 4

0001364

FIG 5

FIG 6

FIG 7

0001364

FIG 8

FIG 9

FIG 10

FIG 11

**Office européen des brevets**

# RAPPORT DE RECHERCHE EUROPEENNE

Numéro de la demande

EP 78 40 0097

| | DOCUMENTS CONSIDERES COMME PERTINENTS | | CLASSEMENT DE LA DEMANDE (Int. Cl.²) |
|---|---|---|---|
| Catégorie | Citation du document avec indication, en cas de besoin, des parties pertinentes | Revendication concernée | |
| X | GB - A - 931 790 (CARTER)  * Revendications 1-4; figure 1 *  -- | 1-4,7 | B 60 P 3/08 |
| X | FR - A - 2 253 657 (LORMAFER)  * Revendication 1 *  -- | 1,3-6 | |
| | US - A - 1 894 534 (DOLAN)  * Figure 1, revendication 1; page 2, lignes 45-58 *  -- | 1,3-4 | |
| | FR - A - 2 148 069 (COSTAMASNAGA)  * Page 4, ligne 20 - page 5, ligne 5, figures 7,8 *  -- | 1,3,4 | DOMAINES TECHNIQUES RECHERCHES (Int. Cl.²)  B 60 P 3/00 |
| | FR - A - 1 373 916 (SWARTZ WELDER)  * Résumé; figure 8 *  -- | 1,3,4 | |
| | DE - C - 849 228 (BEHRENS)  * Revendication 2 *  -- | 1 | |
| | US - A - 3 043 454 (BUTLER)  * Colonne 4, lignes 32-44 *  -- | 1 | |
| | US - A - 2 780 371 (STOUGH)  * Colonne 5, lignes 27-65 *  -- | 1 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-12-1978 | SCHMITTER |

OEB Form 1503.1   06.78